# EUROPEAN PATENT APPLICATION

(11) **EP 4 686 043 A1**
(43) Date of publication of application: **28.01.2026**
(21) Application number: 24774806.4
(22) Date of filing: 13.03.2024
(51) Int. Cl.: H02J 50/80, G06K 7/10, H02J 50/10, H02J 50/12, H02J 50/20, H02J 50/30, H04B 5/48

(54) **POWER RECEPTION DEVICE, POWER TRANSMISSION DEVICE, METHOD TO BE PERFORMED BY POWER RECEPTION DEVICE, AND STORAGE MEDIUM**

(30) Priority: 22.03.2023 JP 2023045979; 29.08.2023 JP 2023138520
(71) Applicant: Canon Kabushiki Kaisha, Tokyo 146-8501 (JP)
(72) Inventor: TAMURA, Ichiro, Tokyo 146-8501 (JP); HIRAMATSU, Tomoki, Tokyo 146-8501 (JP)
(74) Representative: Canon Europe Limited
(86) International application number: PCT/JP2024/009885
(87) International publication number: WO 2024/195668

(57) **Abstract**

A power reception device 101 is a device receiving power wirelessly transmitted from a power transmission device 102. The power reception device 101 performs detection of an NFC tag 103 (S406) and negotiates with a power transmission device. If the NFC tag is detected, the power reception device determines power information representing power requested to the power transmission device in the foregoing negotiation on the basis of predetermined information acquired from the NFC tag (S412), and transmits the power information to the power transmission device (S413).

## Description

### [Technical Field]

The present disclosure relates to a technology of wireless power transmission.

### [Background Art]

In recent years, technical development of wireless power transmission systems has been widely carried out. The technology of wireless power transmission systems generally complies with a standard established by a standardization organization, Wireless Power Consortium (WPC), as a wireless charging standard (WPC standard).

On the other hand, the NFC standard is known as a standard for near field communication. NFC is an abbreviation of Near Field Communication. In the NFC standard, transmission of a message for detecting a communication partner instrument by transmitting carrier waves and applying modulation to the carrier waves is referred to as polling. The polling is transmitted by a device having a function of a reader/writer according to the NFC standard. In addition, an instrument having a function of receiving polling transmitted by a reader/writer and responding to this polling by applying load modulation to carrier waves transmitted by the reader/writer is referred to as an NFC tag.

Patent Document 1 discloses a technology in which a power reception device having a WPC function and an NFC function disables the NFC function when a power transmission device is detected at the time of charging using a contactless method. Accordingly, the power transmission device can transmit high-output power without damaging an NFC tag.

In addition, Patent Document 2 discloses a technology in which, in a power reception device having a function of detecting an NFC tag, if a power transmission device does not have an NFC tag detection function, the power reception device performs detection of an NFC tag and notifies the power transmission device of the detection results. Further, if the power reception device detects an NFC tag, in order to reduce damage to the NFC tag, the power transmission device stops power transmission or transmits low power with the maximum value of transmission power limited to a predetermined value or lower.

### [Citation List]

### [Patent Documents]

[Patent Document 1]
   Japanese Patent Laid-Open No. 2020-089134
[Patent Document 2]
   Japanese Patent Laid-Open No. 2020-182355

### [Summary of Invention]

### [Technical Problem]

If an NFC tag is detected by performing NFC tag detection, it is desirable to execute appropriate processing in addition to performing power transmission with power limited to a predetermined value or lower as described above.

Hence, the present disclosure provides a technology capable of performing appropriate processing if an NFC tag is detected.

### [Solution to Problem]

A power reception device according to an aspect of the present disclosure has a detection means configured to perform detection of a Near Field Communication (NFC) tag, a negotiation means configured to negotiate with a power transmission device, a determination means configured to determine power information representing power requested to the power transmission device in the negotiation on the basis of predetermined information acquired from the NFC tag, and a transmission means configured to transmit the power information.

### [Advantageous Effects of Invention]

According to the present disclosure, it is possible to perform appropriate processing if an NFC tag is detected.

### [Brief Description of Drawings]

FIG. 1 is a diagram illustrating a configuration example of a wireless power transmission system according to an embodiment.
FIG. 2 is a block diagram illustrating a configuration example of a power reception device according to an embodiment.
FIG. 3 is a block diagram illustrating a configuration example of a power transmission device according to an embodiment.
FIG. 4 is a flowchart showing processing performed by the power reception device.
FIG. 5 is a flowchart showing processing of determining a requested power value performed by the power reception device in a first embodiment.
FIG. 6 is a sequence diagram showing processing performed by the power reception device and the power transmission device in the first embodiment.
FIG. 7 is a flowchart showing processing of determining a requested power value performed by the power reception device when a plurality of NFC tags are detected in a second embodiment.
FIG. 8 is a sequence diagram showing processing performed by the power reception device and the power transmission device when a plurality of NFC tags are detected in the second embodiment.

### [Description of Embodiments]

Hereinafter, embodiments of the present disclosure will be described in detail with reference to the attached drawings. It should be noted that not all of multiple features in the embodiments of the present disclosure are essential to the present disclosure, and the multiple features may be combined arbitrarily. In the drawings, the same reference numerals are assigned to identical or similar components, and redundant descriptions will be omitted.

### [First Embodiment]

### <Configuration of System>

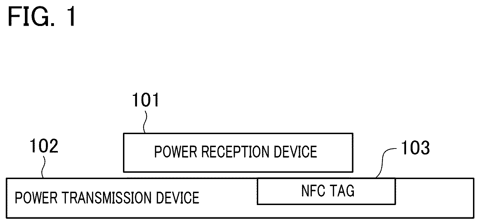

FIG. 1 is a view showing an example of a constitution of a wireless power transmission system according to an embodiment. The diagram shows an example of a constitution of the wireless power transmission system according to the present embodiment. In an example, this wireless power transmission system is constituted to include a power reception device 101 and a power transmission device 102.
Hereinafter, for the sake of simplicity of notation, the power transmission device 102 may be referred to as a TX, and the power reception device 101 may be referred to as an RX.

The RX, for example, is an electronic device that receives power from the TX and charges an internal battery. In addition, the RX has a WPC function that is compliant with the Wireless Power Consortium (WPC) standard and further corresponds to a device authentication protocol of this standard. Furthermore, the RX is equipped with a Near Field Communication (NFC) function and, for example, operates in a card emulation mode using this function and is capable of electronic money payments and the like. In addition, the RX is equipped with an NFC function capable of reading an NFC tag (other device) 103 by performing NFC communication by operating in a reader/writer mode.

The TX, for example, is an electronic device that wirelessly transmits power to the RX that is placed on its own device. The TX wirelessly transmits power to the RX through a power transmission coil. In addition, the TX is equipped with an NFC function capable of reading an NFC tag 103 by performing NFC communication by operating in a reader/writer mode. By using this function, the TX can detect an NFC device and, for example, can stop or limit a power transmission process in order to protect the NFC tag 103. The NFC tag 103 is an example of a device that realizes near field communication by passively operating. As more specific examples, the NFC tag 103 represents an NFC/Radio frequency identifier (RFID) tag capable of performing NFC communication, an NFC communication device operating in a card emulation mode, and the like.

Generally, when a passive NFC tag is exposed to an electromagnetic field performing high-output-power transmission process, an antenna element of the NFC tag, a component implementing the NFC function, and the like are likely to be damaged. Meanwhile, there are power transmission devices into which NFC tags are built for the purpose of provision of additional information and UI display for enabling services, and these NFC tags are configured not to be easily damaged for power transmission of a predetermined output level or less. However, it is preferable for the RX to perform an appropriate process for power transmission other than the power transmission of a predetermined output level or less.

The NFC tag 103, for example, is built into the TX. In the case of an externally-attached device for the TX, the NFC tag 103 may be attached to the surface of the TX or may be arranged in the vicinity of the TX.

Hereinafter, although a smartphone as one example of the RX and a charger as one example of the TX are used for description, the present disclosure is not limited thereto. The RX and the TX may be configured to be built into another device (a camera, a smartphone, a tablet PC, a laptop, a vehicle, a robot, a medical device, or a printer) and to supply power to such a device.

The present system is assumed to perform wireless power transmission using an electromagnetic induction method for non-contact charging on the basis of the WPC standard. In other words, the RX and the TX perform wireless power transmission for non-contact charging based on the WPC standard between the power reception coil of the RX and the power transmission coil of the TX. The wireless power transmission method (non-contact power transmission method) is not limited to the method specified in the WPC standard and may be any other method such as another electromagnetic induction method, a magnetic resonance method, an electric field resonance method, a microwave method, or a method using laser and the like. In addition, in this embodiment, while wireless power transmission is assumed to be used for non-contact charging, the wireless power transmission may be performed for a use other than the non-contact charging.

In the WPC standard, the amount of power guaranteed to be received when the RX receives power from the TX is defined by a value called Guaranteed Load Power (hereinafter referred to as "GP"). GP, for example, represents a power value that is guaranteed to be output to the load of the RX such as a charging circuit or the like, that is, a load power value of the RX even if the power transfer efficiency between the power reception coil and the power transmission coil decreases due to a change in the positional relation between the RX and the TX. In addition, GP may be a load power level agreed upon through Negotiation between the TX and the RX. For example, in a case in which GP is 15 watts, even if the power transfer efficiency drops due to a change in the positional relation between the power reception coil and the power transmission coil, the TX performs power transmission by controlling such that 15 watts can be output to the load inside of the RX.

### <Configuration of Power Reception Device>

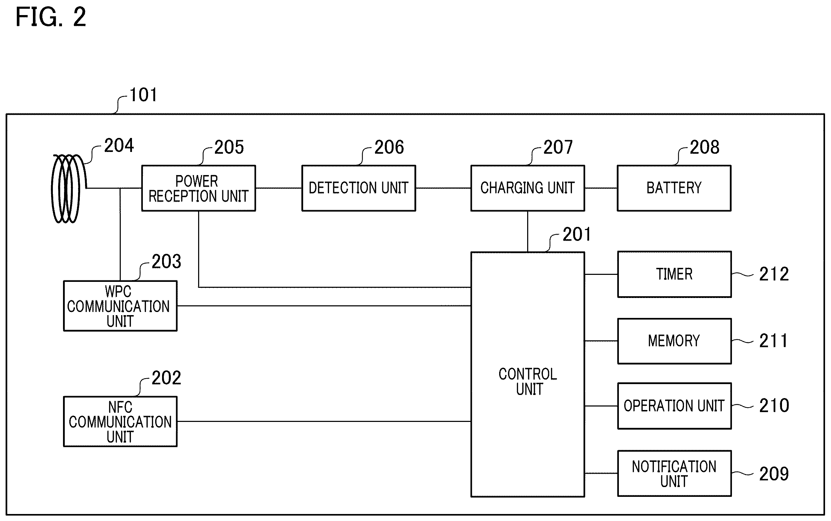

FIG. 2 illustrates an example of the configuration of the RX according to this embodiment. The RX is composed of a control unit 201, an NFC communication unit 202, a WPC communication unit 203, a power reception coil 204, a power reception unit 205, a detection unit 206, a charging unit 207, a battery 208, a notification unit 209, an operation unit 210, a memory 211, and a timer 212.

The control unit 201 controls the entire smartphone. The control unit 201, as an example, is configured using a central processing unit (CPU) or a microprocessor unit (MPU). In addition, the control unit 201 can measure a time using the timer 212. The control unit 201 performs control, for example, by executing a control program stored in the memory 211. The control unit 201, for example, is configured to include at least one or more processors such as a Central Processing Unit (CPU), a Micro Processing Unit (MPU), and the like.

In addition, the control unit 201 may be configured using dedicated hardware for a specific process such as an application specific integrated circuit (ASIC) or the like. Alternatively, the control unit 201 may be configured to include an array circuit such as a Field Programmable Gate Array (FPGA) complied to execute a predetermined process or the like. The control unit 201 causes the memory 211 to store information to be stored during execution of various processes.

In this embodiment, although the control unit 201 is represented as one constituent element, the configuration is not limited thereto. For example, a WPC control unit that controls a process relating to power reception with the power transmission device in the power reception device may be configured to be separated from the control unit 201. Alternatively, an NFC control unit that controls a process relating to NFC communication may be configured to be separated from the control unit 201. Alternatively, the WPC control unit and the NFC control unit may be configured to be separated from the control unit 201. In the case of a configuration in which the control unit 201 is separated into multiple units, the control units are connected to each other using a communication interface and can perform data communication. The communication interface, more specifically, may be any interface as long as it is an interface that realizes data communication such as an I2C, a GPIO, or the like.

The NFC communication unit 202 is a hardware module that realizes the NFC function. More specifically, the NFC communication unit 202 realizes a card emulation mode replacing the role as a non-contact IC card, a reader/writer mode used for reading the NFC tag 103, and a P2P mode in which a message is directly exchanged between NFCs. For example, by using the card emulation mode, electronic money payments and the like are enabled. At least the NFC communication unit 202 functions as a detection means configured to detect the NFC tag 103.

The WPC communication unit 203 performs wireless power transmission communication based on the WPC standard with the communication unit 306 of the TX. The WPC communication unit 203 obtains information transmitted from the TX by demodulating electromagnetic waves input from the power reception coil 204 and superimposes information to be transmitted to the TX into an electromagnetic waves by performing load modulation of the electromagnetic waves, thereby performing communication with the TX. That is, the WPC communication unit 203 also functions as a transmission means.

The power reception unit 205 receives AC power (AC voltage and AC current) generated by electromagnetic induction based on electromagnetic waves emitted from the transmission coil of the TX through the power reception coil 204. The power reception unit 205 converts the AC power into DC power or AC power with a predetermined frequency and outputs the converted power to the detection unit 206.

The detection unit 206 detects that the RX is placed in the TX on the basis of the WPC standard. The detection unit 206, for example, detects at least one of a voltage value and a current value of the power reception coil 204 acquired when the power reception unit 205 receives a Digital Ping of the WPC standard through the power reception coil 204. For example, in a case in which the voltage value is below a predetermined voltage threshold value or in a case in which the current value exceeds a predetermined current threshold value, the detection unit 206 can judge that the RX is placed in the TX.

The charging unit 207 charges the battery 208 using power supplied from the power reception unit 205. In addition, the charging unit 207 starts or stops charging the battery 208 on the basis of control of the control unit 201 and further adjusts power used for charging the battery 208 on the basis of a charged state of the battery 208. When the power used by the charging unit 207 changes, the power supplied from the power reception unit 205, that is, received power of the RX also changes in accordance therewith. The charging unit 207 represented here is a load of the RX.

The battery 208 supplies power that is necessary for control of each unit of the RX according to the control unit 201, power reception, and communication to the entire RX. In addition, the battery 208 accumulates power received through the power reception coil 204.

The notification unit 209 notifies a user of information using an arbitrary technique such as a visual, auditory, or tactile technique. The notification unit 209, for example, notifies a user of the charged state of the RX and the state relating to power transmission of the wireless power transmission system including the RX and the TX as illustrated in FIG. 1. The notification unit 209, for example, is configured to include a liquid crystal display, an LED, a speaker, a vibration generating circuit, and other notification devices.

The operation unit 210 has a reception function for accepting an operation on the RX from a user. The operation unit 210, for example, is configured to include buttons and a keyboard, an audio input device such as a microphone, a motion detection device such as an acceleration sensor or a gyro sensor, or other input devices. In addition, a device acquired by integrating the notification unit 209 and the operation unit 210 such as a touch panel may be used.

The memory 211, as described above, stores various kinds of information such as identification information and device configuration information, a control program, and the like. In addition, the memory 211 may store information that is acquired by functional units other than the control unit 201.

The timer 212 performs time measurement using, for example, a count-up timer that measures an elapsed time from an activation time, a countdown timer that counts down from a set time, or the like.

### <Configuration of Power Transmission Device>

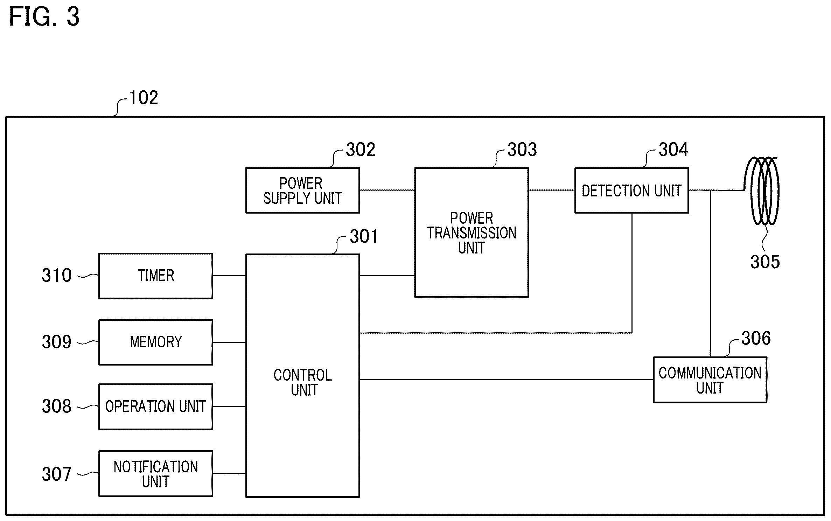

FIG. 3 illustrates an example of the configuration of the TX according to this embodiment. The TX is composed of a control unit 301, a power supply unit 302, a power transmission unit 303, a detection unit 304, a power transmission coil 305, a communication unit 306, a notification unit 307, an operation unit 308, a memory 309, and a timer 310.

The control unit 301 controls the entire TX, for example, by executing a control program stored in the memory 309. In other words, the control unit 301 controls each functional unit illustrated in FIG. 3. In addition, the control unit 301 performs control relating to power transmission control in the TX. Furthermore, the control unit 301 performs control relating to the NFC function in the TX. In addition, the control unit 301 may perform control for executing applications other than the wireless power transmission. The control unit 301, for example, is configured to include one or more processors such as a CPU and an MPU. The control unit 301 may be configured using one processor and, as described with reference to FIG. 2, a main control unit controlling the entirety and sub control units for controlling the power transmission process and the NFC communication may be realized using different processors.

The control unit 301 may be configured to include dedicated hardware for a specific process such as an application specific integrated circuit (ASIC) and an array circuit such as an FPGA complied to execute a predetermined process. The control unit 301 causes the memory 309 to store information to be stored during execution of various processes. In addition, the control unit 301 can measure a time using the timer 310.

The power supply unit 302 supplies power that is necessary for control of the TX using the control unit 301, power transmission, and communication for the entire TX. The power supply unit 302, for example, is a commercial power supply or a battery. Power supplied from a commercial power supply is accumulated in the battery.

The power transmission unit 303 converts DC or AC power input from the power supply unit 302 into AC frequency power with a frequency band used for wireless power transmission and inputs the AC frequency power to the power transmission coil 305, thereby generating electromagnetic waves used for causing the RX to receive power. The power transmission unit 303 functions as a power transmission means. The frequency of the AC power generated by the power transmission unit 303, for example, is about several hundreds of kHz (for example, 110 kHz to 205 kHz). The power transmission unit 303 inputs AC frequency power to the power transmission coil 305 on the basis of an instruction from the control unit 301 to cause the RX to output electromagnetic waves used for power transmission from the power transmission coil 305.

In addition, the power transmission unit 303 adjusts a voltage (power transmission voltage) or a current (power transmission current) input to the power transmission coil 305 or both thereof, thereby controlling the intensity of electromagnetic waves to be output. When the power transmission voltage or the power transmission current is increased, the intensity of the electromagnetic waves becomes stronger, and when the power transmission voltage or the power transmission current is decreased, the intensity of the electromagnetic waves becomes weaker. In addition, the power transmission unit 303 performs output control of the AC frequency power such that power transmission from the power transmission coil 305 starts or stops on the basis of an instruction from the control unit 301. Furthermore, the power transmission unit 303 notifies the control unit 301 of a current transmission power such that, for an arbitrary timing, the control unit 301 can acquire a transmission power at that timing. In addition, the measurement of a transmission power and the notification to the control unit 301 may be configured to be performed by a component other than the power transmission unit 303.

The detection unit 304 detects whether or not an object is placed in the TX on the basis of the WPC standard. More specifically, the detection unit 304 detects whether or not an object is placed on the Interface Surface of the TX. The detection unit 304, for example, detects at least one of a voltage value and a current value of the power transmission coil 305 at the time when the power transmission unit 303 transmits an Analog Ping of the WPC standard through the power transmission coil 305.

In addition, the detection unit 304 may detect a change in the impedance. Then, in a case in which the voltage is below a predetermined voltage value or in a case in which the current value exceeds a predetermined current value, the detection unit 304 can judge that an object is placed in the TX. In addition, whether this object is the power reception device or any other foreign object is judged on the basis of presence/absence of a predetermined response to a Digital Ping that is continuously transmitted by the communication unit 306. In other words, in a case in which the TX receives the predetermined response, the object is judged to be the power reception device, and otherwise, the object is judged to be an object different from the power reception device.

The communication unit 306 performs control communication with the RX on the basis of the WPC standard as described above. The communication unit 306 modulates electromagnetic waves output from the power transmission coil 305 and transmits information to the RX to perform communication. In addition, the communication unit 306 demodulates the electromagnetic waves that have been output from the power transmission coil 305 and have been modulated by the RX to obtain the information that has been transmitted by the RX. In other words, the communication performed by the communication unit 306 is performed with being superimposed onto electromagnetic waves transmitted from the power transmission coil 305. In this case, the communication unit 306 functions as at least a reception means.

In addition, the communication unit 306 performs NFC communication and performs detection of the NFC tag 103 of the device that transmits power. In the communication unit 306, a module that performs control communication based on the WPC standard and a module that performs the NFC communication may be realized by one piece of hardware, or each module may be realized by different hardware.

The notification unit 307 notifies a user of information using an arbitrary technique such as a visual, auditory, or tactile technique. The notification unit 307, for example, notifies a user of information representing the charged state of the TX and the state relating to power transmission of the wireless power transmission system including the RX and the TX as illustrated in FIG. 1. The notification unit 307, for example, is configured to include a liquid crystal display, an LED, a speaker, a vibration generating circuit, and other notification devices.

The operation unit 308 has a reception function for accepting an operation on the TX from a user. The operation unit 308, for example, is configured to include buttons and a keyboard, an audio input device such as a microphone, a motion detection device such as an acceleration sensor or a gyro sensor, or other input devices. In addition, a device acquired by integrating the notification unit 307 and the operation unit 308 such as a touch panel may be used.

The memory 309 stores various kinds of information such as identification information and capability information, a control program, and the like. The capability information includes information representing whether high-accuracy foreign object detection processing capability is included. In addition, the memory 309 may store information that is acquired by functional units other than the control unit 301.

The timer 310 performs time measurement using, for example, a count-up timer that measures an elapsed time from an activation time, a countdown timer that counts down from a set time, or the like.

### <Process of Power Reception Device>

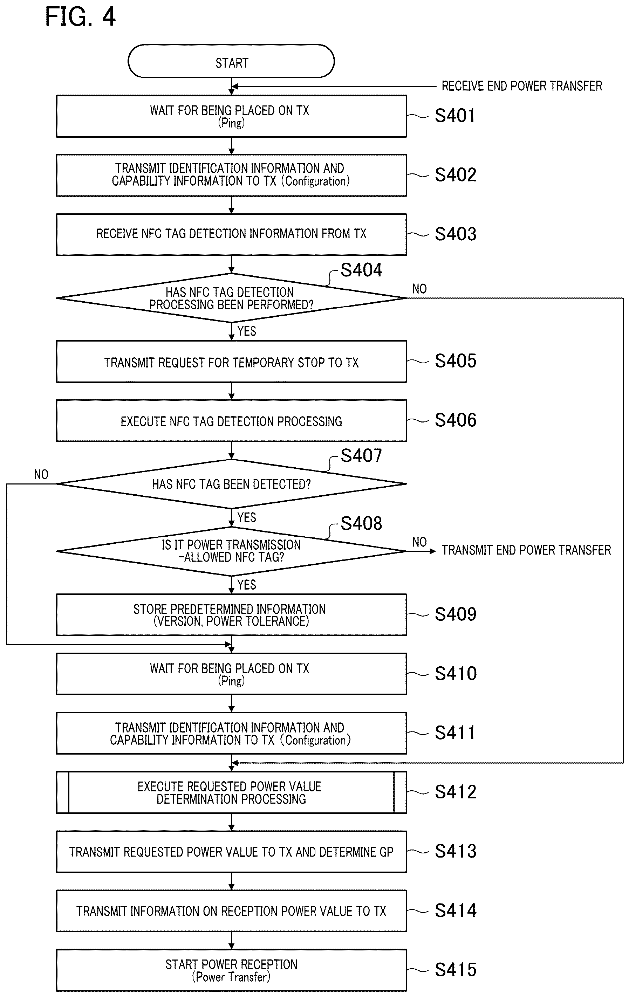

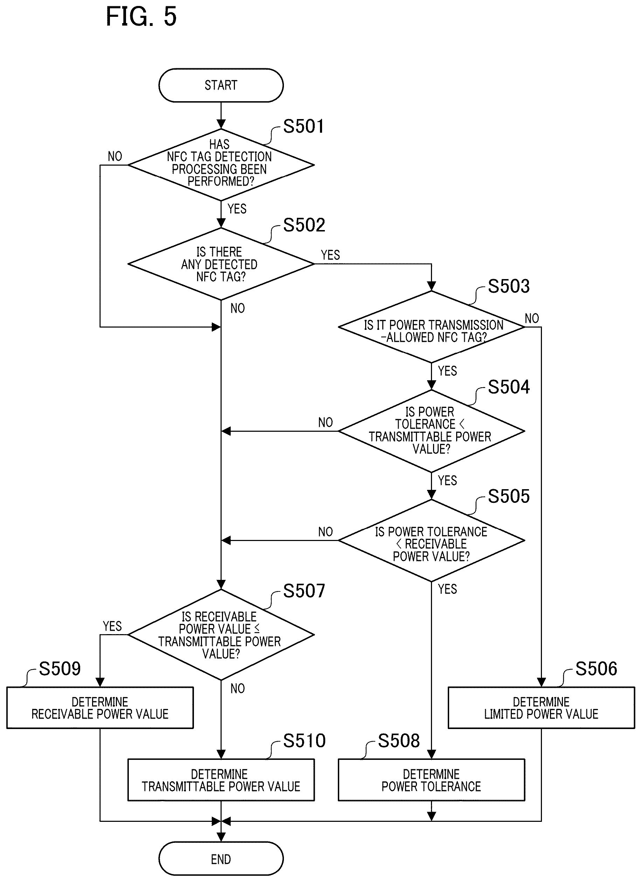

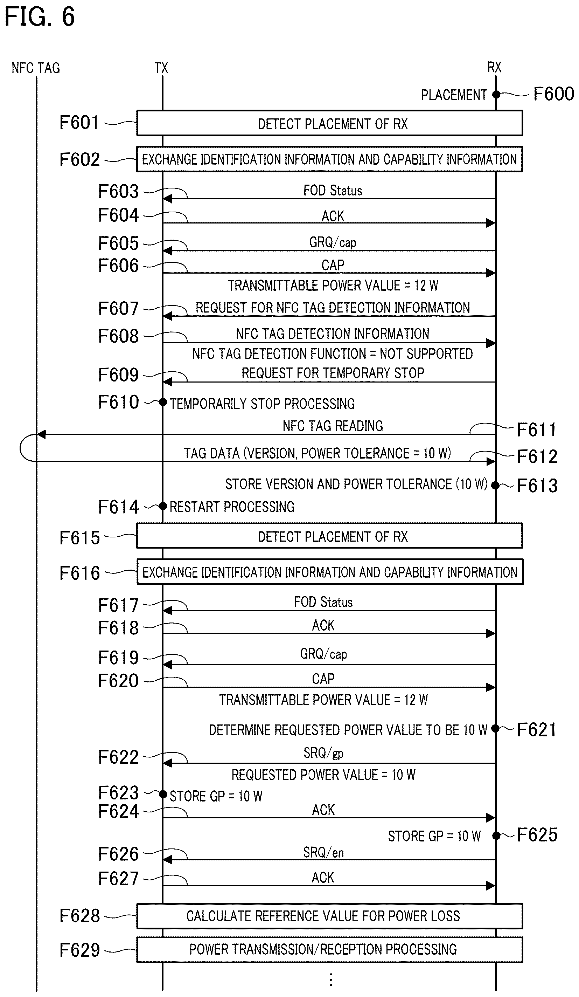

FIG. 4 is a flowchart showing an example of a flow of processing executed by the RX. For example, this processing may be realized by the controller 201 of the RX executing a program read from the memory 211. At least a portion of the following procedure may be realized by hardware. For example, the hardware in this case may be realized by automatically generating a dedicated circuit using a gate array circuit such as an FPGA from a program for realizing each processing step using a predetermined compiler. The same applies to the processing shown in FIGS. 5 and 6, which will be described below.

This processing may be executed in response to an input when a user of the RX inputs an instruction to start a contactless charging application in response to the power source of the RX being turned on or in response to the RX being activated by power supply from the battery 208 or the TX. In addition, this processing may be started by other triggers.

In S401, after the processing has started, the RX executes processing stipulated as a ping phase according to the WPC standard and waits for the host device to be placed on the TX. For example, the RX detects that it has been placed on the TX by detecting a Digital Ping from the TX. When it is detected that the host device has been placed on the TX, the RX transmits the identification information and the capability information of the RX to the TX in S402 by communication in a Configuration phase stipulated in the WPC standard.

Here, The identification information of the RX includes a Manufacturer Code and a Basic Device ID. The capability information of the RX includes the following information.
- Information that can be used for identifying a version of the corresponding WPC standard
- A Maximum Power Value (or Reference Power) that is a value identifying a maximum power that can be supplied to the load by the RX
- Information representing whether or not a Negotiation function of the WPC standard is included

However, such information is an example, and the identification information and the capability information of the RX may be replaced with other information or may further include other information. For example, the identification information may be other arbitrary identification information that can be used for identifying an individual RX such as a Wireless Power ID or the like. In addition, the RX may obtain the identification information and the capability information using a method other than the communication of the Configuration phase of the WPC standard.

When the identification information and the capability information are transmitted, the RX starts communication in a Negotiation phase stipulated in the WPC standard. In this case, the controller 201 mainly functions as a negotiation means. When communication in the Negotiation phase starts, in S403, the RX acquires NFC tag detection information from the TX. Here, the NFC tag detection information may include information, such as whether or not the TX has an NFC tag detection function, whether or not NFC tag detection processing has been performed, and whether or not an NFC tag has been detected as a result of the NFC tag detection processing.

After the NFC tag detection information has been acquired, in S404, the RX judges whether or not to perform the NFC tag detection processing. Here, whether or not to perform the NFC tag detection processing is judged on the basis of the NFC tag detection information acquired from the TX. For example, if the TX does not have the NFC tag detection function, or if it has the NFC tag detection function but detection of an NFC tag has not yet been performed, the RX performs the NFC tag detection processing. In addition, without being limited to this, if the TX has detected an NFC tag as a result of executing detection of an NFC tag, the RX may also execute the NFC tag detection processing to reconfirm whether or not there is an NFC tag. Accordingly, an NFC tag can be detected more reliably.

If it is judged to perform the NFC tag detection processing (YES in S404), the RX proceeds to the processing of S405. Meanwhile, if it is judged not to perform the NFC tag detection processing (NO in S404), the processing proceeds to S412. In S405, the RX transmits a request for a temporary stop to the TX and proceeds to the processing of S406. In S406, the RX performs the NFC tag detection processing and proceeds to the processing of S407. Here, the NFC tag detection processing may be executed in order for each tag type, such as Type-A, Type-B, and Type-F, using a reader/writer function which complies with the NFC standard, but it is not limited thereto.

When the NFC tag detection processing is performed, in S407, the RX judges whether or not an NFC tag has been detected in the NFC tag detection processing.
Here, the NFC tag detection can be performed using the reader/writer function that is compliant with the NFC standard. Subsequently, in S503, the TX judges whether or not an NFC tag has been detected. Here, the judgment on whether or not an NFC tag has been detected can be performed on the basis of whether or not predetermined communication with an NFC tag has been performed using the reader/writer function, and whether or not data (information) stored in the NFC tag has been able to be read. The data stored in the NFC tag may be data that is recorded in an NFC Data Exchange Format (NDEF) defined in the NFC standard. The data stored in the NFC tag may be data having a format that can be recognized by the TX as predetermined data such as Raw data or the like and is not limited thereto.

If it is judged that an NFC tag has been detected (YES in S407), the RX proceeds to the processing of S408. Meanwhile, if it is judged that no NFC tag has been detected (NO in S407), the RX proceeds to the processing of S410. In S408, the RX judges whether or not the detected NFC tag is a power transmission-allowed NFC tag. Whether or not it is a power transmission-allowed NFC tag may be judged based on whether or not information indicating that it is a power transmission-allowed NFC tag is included in the data read from the NFC tag. The form of the information indicating that it is the allowed NFC tag may be a value, a character string, or the like, but it is not limited thereto. Here, "a power transmission-allowed NFC tag" includes the meaning that the NFC tag is an NFC tag allowing power transmission by the TX.

If it is judged that the detected NFC tag is a power transmission-allowed NFC tag (YES in S408), the RX proceeds to the processing of S409. Meanwhile, if it is judged that the detected NFC tag is not a power transmission-allowed NFC tag (NO in S408), the RX transmits an End Power Transfer (EPT) data packet according to the WPC standard to the TX, and the processing ends.

In the present embodiment, if the detected NFC tag is not a power transmission-allowed NFC tag, the processing ends immediately, but it does not have to end. In this case, by setting a requested power value (which will be described below) to a limited power value, it becomes possible to continue transmitting and receiving power while curbing breakdown or generation of heat in the NFC tag, and therefore a safer and highly efficient wireless power transmission system can be realized.

In S409, the RX stores predetermined information included within the data stored in the power transmission-allowed NFC tag and proceeds to the processing of S410. Here, the predetermined information, mainly, may be a power value that is allowed in power transmission (hereinafter, referred to as an power tolerance) by this NFC tag. The power value allowed in power transmission may be a power value representing Tolerance of this NFC tag relating to a transmission power of the TX and a reception power of the RX. Alternatively, it may be a power value that can be endured by this NFC tag. More specifically, the power value representing the Tolerance of an NFC may be a Negotiable Load Power to be described below or a power value corresponding to a requested power value of Guaranteed Load Power (which will be described below). The information representing an power tolerance includes a meaning indicating that this NFC tag is a power transmission-allowed NFC tag. In other words, a meaning indicating that this NFC tag is an NFC tag for which power transmission is allowed by the TX is included.

In addition, examples of the predetermined information include not only the power tolerance but also the version of the Qi standard under the WPC standard, information representing which NFC version this NFC tag corresponds, the version of the protection function, and the like. The information representing which NFC version this NFC tag corresponds, for example, is the version of the NFC-related standards established by the NFC Forum, which is the standardization body for the NFC, information of Type-A/B/F, and the like.

Subsequently, in S410, the processing stipulated as the ping phase according to the WPC standard is executed again, and the host device waits for being placed on the TX. When it is detected that the host device is placed on the TX, in S411, the RX transmits the identification information and the capability information to the TX by communication in the Configuration phase stipulated in the WPC standard, and proceeds to the processing of S412. In S412, the RX executes the processing of determining the requested power value. The processing of determining the requested power value will be described below.

In S413, the RX transmits the requested power value (requested value of transmission power) determined in S412 to the TX, and determines the value of the GP between the RX and the TX. When the GP is determined, in S414, the RX transmits to the TX information on a predetermined reception power value for the TX to derive the relationship of the reception power with respect to the transmission power in a state of having no foreign object. Here, the information on a predetermined reception power value includes a reception power value in a light load state/ Light Load, and a reception power value in a maximum load/ Connected Load state. When the information on the reception power value is transmitted, in S415, the RX starts power reception by communication in a Power Transfer phase stipulated in the WPC standard. Thereafter, if an error occurs, or if it is fully charged, the RX transmits the EPT data packet according to the WPC standard. Accordingly, power transmission from the TX stops, and the series of processing for contactless charging ends.

Subsequently, with reference to FIG. 5, an example of a flow of processing of determining the requested power value executed by the RX in S412 will be described. In this processing, the controller 201 functions as a determination means configured to determine the requested power value. The requested power value is power information transmitted to the TX in negotiation performed with the TX in the Negotiation phase.

The RX, which has been triggered by starting of the processing, judges whether or not the RX itself has executed the NFC tag detection processing (S501). If the NFC tag detection processing has been executed (YES in S501), the RX proceeds to the processing of S502. Meanwhile, if the NFC tag detection processing has been performed (NO in S501), the RX proceeds to the processing of S507. In S502, the RX judges whether or not an NFC tag has been detected in the NFC tag detection processing in S406. If it is judged that an NFC tag has been detected (YES in S502), the RX proceeds to the processing of S503. Meanwhile, if it is judged that no NFC tag has been detected (NO in S502), the RX proceeds to the processing of S507.

In S503, the RX judges whether or not the detected NFC tag is a power transmission-allowed NFC tag. At this time, the controller 201 mainly functions as a judgment means. If it is judged that the detected NFC tag is a power transmission-allowed NFC tag (YES in S503), the RX proceeds to the processing of S504. Meanwhile, if it is judged that the detected NFC tag is not a power transmission-allowed NFC tag (NO in S503), the RX determines the limited power value as the requested power value (S506), and the processing of determining the requested power value ends. The limited power value is a sufficiently small value which is equal to or smaller than a predetermined value having a small probability of occurrence of breakdown, generation of heat, or the like in the NFC tag even if the power transmission processing continues. For example, it is 5 watts or lower, but it is not limited thereto.

In S504, the RX judges whether or not the power tolerance is a value smaller than a transmittable power value. The transmittable power value is the maximum transmittable power value of power which the TX can transmit at the point of time, and may be the Negotiable Load Power according to the WPC standard. If the power tolerance is a value smaller than the transmittable power value (YES in S504), the RX proceeds to the processing of S505. Meanwhile, if the power tolerance is a value equal to or larger than the transmittable power value (NO in S504), the RX proceeds to the processing of S507.

In S505, the RX judges whether or not the power tolerance is a value smaller than a receivable power value. The receivable power value is the maximum receivable power value of power which the RX can receive at the point of time, and may be calculated based on the operation state of the RX. In addition, the maximum receivable power value may be the Maximum Power Value (or Reference Power). At this time, the controller 201 functions as a calculation means. For example, the operation state of the RX may be determined based on a load, a temperature, coupling coefficients of the power transmission/reception coils, and the like, but it is not limited thereto. If the power tolerance is a value smaller than the receivable power value (YES in S505), the RX determines the power tolerance as the requested power value (S508), and the processing of determining the requested power value ends. Meanwhile, if the power tolerance is a value equal to or larger than the receivable power value, the RX proceeds to the processing of S507.

In S507, the RX judges whether or not the receivable power value is a value equal to or smaller than the transmittable power value. If the receivable power value is a value equal to or smaller than the transmittable power value (YES in S507), the RX determines the receivable power value as the requested power value (S509), and the processing of determining the requested power value ends. Meanwhile, if the receivable power value is a value larger than the transmittable power value (NO in S507), the RX determines the transmittable power value as the requested power value (S510), and the processing of determining the requested power value ends.

### <Process of Entire System>

Next, an operation sequence in a case of executing the foregoing processing in the present embodiment will be described using FIG. 6. Regarding an initial state, it is assumed that the RX is in a state of not being placed on the TX. In addition, it is assumed that a power transmission-allowed NFC tag is built into or attached to the TX, or an NFC tag is disposed around the TX so that the placed RX can read data of the NFC tag. In addition, the present embodiment will be described on the assumption that the power tolerance is 10 watts, the transmittable power value is 12 watts, and the receivable power value is 15 watts, for example.

When the RX detects that itself has been placed on the TX, after the identification information and the capability information are exchanged, communication in the Negotiation phase starts, and the NFC tag detection information is acquired from the TX. The RX performs the NFC tag detection processing based on the acquired NFC tag detection information. At this time, although the RX detects an NFC tag, since the detected NFC tag is a power transmission-allowed NFC tag, control is performed to continue the power transmission processing. Thereafter, since the comparison of the power values shows a relationship of power tolerance < transmittable power value < receivable power value as described above, the RX requests the power tolerance as the value of the GP.

When the RX is placed on the TX in F600, the TX and the RX execute communication in the ping phase according to the WPC standard, and the RX detects that itself has been placed on the TX (F601, S401). Next, in F602, the RX transmits the identification information and the capability information to the TX by communication in the Configuration phase according to the WPC (S402). Subsequently, the TX and the RX start communication in the Negotiation phase according to the WPC standard, and in F603, the RX transmits an FOD Status data packet according to the WPC standard to the TX. When the TX receives the FOD Status data packet, in the present embodiment, it is assumed that there is no foreign object, and an ACK is transmitted in F604.

Subsequently, in F605, the RX transmits a notification request for the capability information (CAP) to the TX using a General Request (GRQ) data packet according to the WPC standard. When a notification request for the capability information is received, in F606, the TX transmits a CAP data packet according to the WPC standard to the RX. The CAP data packet may include the transmittable power value, that is, the Negotiable Load Power. When the RX receives the CAP data packet, the WPC communication unit 203 or the controller 201 functions as an acquisition means configured to acquire the transmittable power value.

Next, in F607, the RX transmits a notification request for the NFC tag detection information to the TX using the GRQ data packet according to the WPC standard. When a notification request for the NFC tag detection information is received, in F608, the TX transmits the NFC tag detection information to the RX. The NFC tag detection information may be transmitted using a data packet stipulated in the WPC standard. In addition, the NFC tag detection information may include information on whether or not the TX has the NFC tag detection function, whether or not NFC tag detection has been executed, whether or not an NFC tag has been detected as a result of NFC tag detection, and the like. Hereinafter, the present embodiment will be described on the assumption that the TX does not have the NFC tag detection function.

When the NFC tag detection information is received (S403), since the TX does not have the NFC tag detection function, the RX judges to perform the NFC tag detection processing (YES in S404). Further, the RX transmits a request for a temporary stop to the TX using the GRQ data packet according to the WPC standard in F609 (S405). Here, a request for a temporary stop may include a time to stop the processing in the TX. In addition, a request for a temporary stop may be the EPT data packet according to the WPC standard, but a request may be made using a different packet. A request for a temporary stop may be the EPT data packet including a code indicating that power transmission restarts after an elapse of a predetermined time according to the WPC standard. When a request for a temporary stop is received, the TX temporarily stops the power transmission processing in F610.

When the NFC tag detection processing starts, the RX executes NFC tag reading in F611 (S406), and acquires predetermined data from the NFC tag in F612 indicating that it is a power transmission-allowed NFC tag (YES in S407, YES in S408). Subsequently, in F613, the RX mainly stores the power tolerance as the predetermined information to be included in the data (S409). The predetermined information stored by the RX may be at least one of the power tolerance, the version of the Qi standard in the WPC standard, the information on which version of NFC the NFC tag supports, and the version of the protection function. In F614, the TX restarts the power transmission processing. Since the processing of F615 to F620 is similar to F601 to F606, description will be omitted.

In F621, the RX executes requested power value determination processing (S412). The RX detects a power transmission-allowed NFC tag (YES in S501, YES in S502, YES in S503). Currently, since the relationship of power tolerance < transmittable power value is established (YES in S504), and the relationship of power tolerance < receivable power value is established (YES in S505), the RX determines the requested power value of the GP as the power tolerance (S508). Next, in F622, the RX stores the requested power value of the GP in a Specific Request (SRQ) data packet according to the WPC standard and transmits it to the TX. When the SRQ data packet which is a request for the GP is received, since the requested power value is a value equal to or smaller than the transmittable power value of itself, the TX accepts the requested power value and stores it as the value of the GP in F623. Subsequently, in F624, the TX transmits the ACK which is a response of approval to the RX. When the ACK is received, it is assumed that the requested power value which has been transmitted in F622 is accepted, the RX stores the requested power value as the value of the GP in F625 (S413).

Next, in F626, the RX transmits a notification of ending the Negotiation phase to the TX using the SRQ data packet according to the WPC standard. When the notification of ending the Negotiation phase is received, the TX transmits the ACK which is a response of approval to the RX in F627. Thereafter, the RX and the TX perform calculation of the reference value for a power loss for the purpose of detecting a foreign object on the basis of the determined value of the GP (F628, S414), and starts power transmission/reception processing (F629, S415).

According to the operation which has been described above, if a power transmission-allowed NFC tag is detected, the RX according to the present embodiment requests, as the value of the GP, the smallest value of the transmittable power value of the power transmission device, the receivable power value of the power reception device, and the power value allowed by the NFC tag. Accordingly, even if a power transmittable NFC tag is present on the TX, it becomes possible to continue transmitting and receiving power while curbing breakdown or generation of heat in the NFC tag, and therefore a safer and highly efficient wireless power transmission system can be realized. That is, if an NFC tag is detected, the power reception device according to the present embodiment can perform preferred processing corresponding to the characteristics and the capability of the detected NFC tag.

### [Second Embodiment]

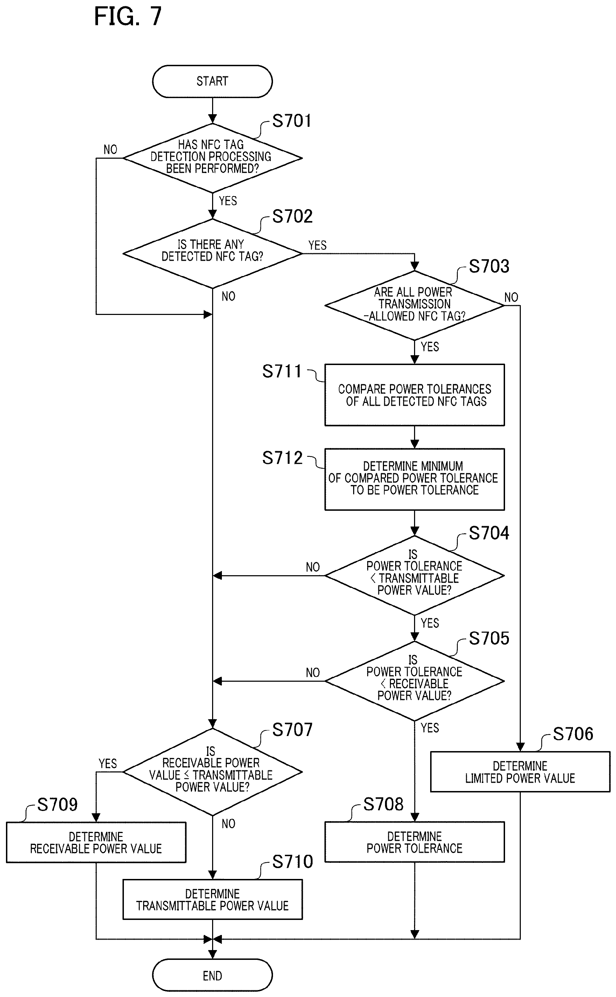

Next, a second embodiment will be described. In the present embodiment, description of the constitution and the processing similar to those of the foregoing first embodiment will be omitted. FIG. 7 is a flowchart showing processing of determining a requested power value executed in S412 when the RX has detected a plurality of NFC tags in S406. In this processing, the controller 201 functions as a determination means configured to determine the requested power value. The requested power value is power information to be transmitted to the TX in negotiation performed with the TX in the Negotiation phase.

The processing of S701 and S702 is similar to the processing of S501 and S502. Here, in the present embodiment, in judgment of S702, it is assumed that a plurality of tag types of NFC tags, such as an NFC tag A having a power tolerance of 10 watts and an NFC tag B having a power tolerance of 15 watts, are detected. The NFC tag A is a Type-A NFC tag, and the NFC tag B is a Type-B NFC tag. The term "a plurality of NFC tags" is not limited to the case where a plurality of tag types of NFC are detected in this manner, and a case where a plurality of NFC tags of the same type are detected is also conceivable. In this case, the reception device includes an NFC communication unit which can individually detect the plurality of NFC tags of the same type.

In S703, the RX judges whether or not all the detected NFC tags are NFC tags allowed for power transmission. If it is judged that all the detected NFC tags are Power transmission-allowed NFC tags (YES in S703), the RX proceeds to the processing of S711. Meanwhile, if it is judged that at least one of the detected NFC tags is not a power transmission-allowed NFC tag (NO in S703), the RX determines the limited power value as the requested power value (S706), and the processing of determining the requested power value ends.

In S711, the RX compares the power tolerances of all the detected NFC tags. In the present embodiment, the RX compares the power tolerance of the NFC tag A (10 watts) and the power tolerance of the NFC tag B (15 watts).

In S712, as a result of comparison in the S711, the RX determines the smallest power tolerance ( a minimum value) as the power tolerance for all the NFC tags detected in S702. In the present embodiment, since the power tolerance of the NFC tag A (10 watts) is a minimum, the power tolerance is determined as 10 watts.

The processing of S704, S705, and S707 to S710 is similar to the processing of S504, S505, and S507 to S510.

### <Process of Entire System>

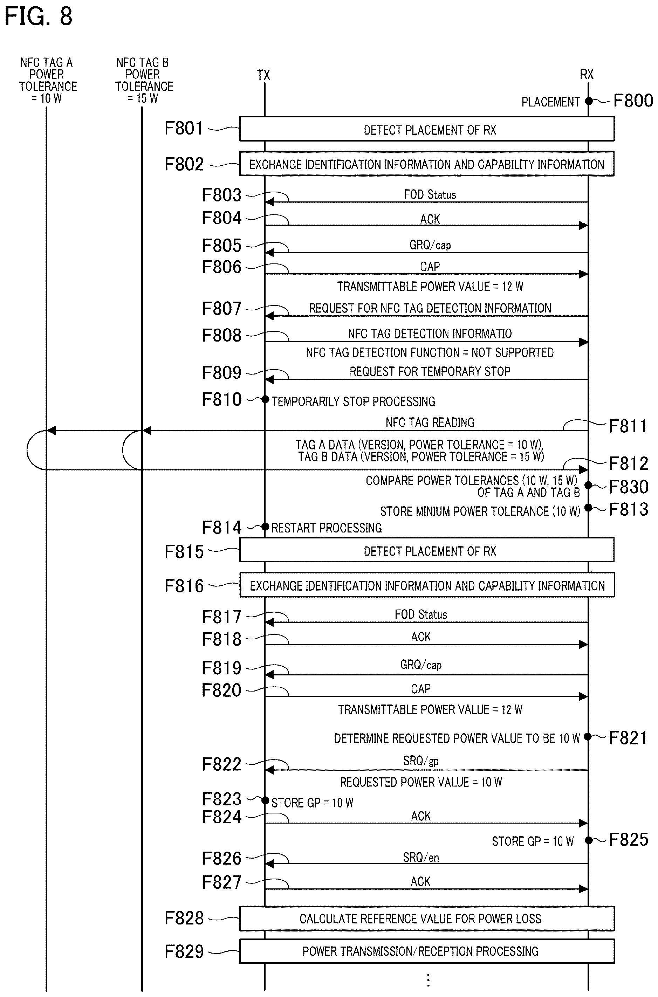

Next, an operation sequence of a case in which processes illustrated in FIG. 7 are executed in this embodiment is described with reference to FIG. 8. An initial state is assumed to be a state in which the RX is not placed in the TX. In addition, an NFC tag allowed to perform power transmission is built or mounted into the TX, or an NFC tag is arranged in the vicinity of the TX, and the placed RX can read data of this NFC tag. In this embodiment, the NFC tag A and the NFC tag B described above are arranged in the vicinity of the TX, and the power tolerance of the NFC tag A and B are respectively 10 watts and 15 watts. Similar to the first embodiment, the transmittable power value of the TX = 12 watts, and the receivable power value of the RX = 15 watts.

The processing of F800 to F810 is similar to the processing of F600 to F610. When the NFC tag detection processing starts, the RX executes NFC tag reading in F811 (S406). Next, predetermined data is acquired from the NFC tag A and the NFC tag B in F812 indicating that they are Power transmission-allowed NFC tags (YES in S407, YES in S408). The present embodiment describes both the NFC tag A and the NFC tag B as Power transmission-allowed NFC tags. However, if at least one of them is not a power transmission-allowed NFC tag, the RX determines the limited power value as the requested power value (S706), and the processing of determining the requested power value ends.

In F812, the RX which has detected the plurality of NFC tags compares the power tolerances from the acquired predetermined data of each NFC tag (F830). In the present embodiment, the power tolerance of the NFC tag A (10 watts) and the power tolerance of the NFC tag B (15 watts) are compared in F830. The RX determines that the power tolerance of the NFC tag A (10 watts) is the a minimum power tolerance of all the detected NFC tags (S712), and stores it (F813). Together with the minimum power tolerance, the RX may store the version of the Qi standard in the WPC standard, the information on which version of NFC the NFC tag supports, and the version of the protection function as the predetermined information included in the predetermined data.

The processing of F814 to F829 is similar to the processing of F614 to F629.

According to the operation which has been described above, if a plurality of Power transmission-allowed NFC tags are detected, the RX according to the present embodiment compares the power tolerances of the NFC tags with each other, and determines the a minimum power tolerance as the power tolerance of all the detected NFC tags. Accordingly, if a plurality of Power transmission-allowed NFC tags are detected, breakdown or generation of heat in the NFC tags due to power reception exceeding the minimum power tolerance can be curbed. That is, if a plurality of Power transmission-allowed NFC tags are detected, the power reception device according to the present embodiment can perform appropriate processing with respect to all the detected NFC tags.

### [Other Embodiments]

In the foregoing embodiments, in the RX, the requested power value is determined in a state where the transmittable power value (=the Negotiable Load Power) of the TX has been acquired, but the requested power value may be determined in a state where it has not been acquired. That is, the requested power value may be determined on the basis of two values, such as the receivable power value of the RX and the power tolerance of the NFC tag. In this case, the RX judges whether or not the relationship of power tolerance < receivable power value has been established. If the result is true, the power tolerance can be set as the requested power value of the GP, and if the result is false, the receivable power value can be set as the requested power value of the GP. Accordingly, even if the transmittable power value of the TX is not acquired, it becomes possible to continue transmitting and receiving power while curbing breakdown or generation of heat in the NFC tag, and therefore a safer and highly efficient wireless power transmission system can be realized.

In the foregoing embodiments, although a version and an power tolerance are included in the data stored in the power transmission-allowed NFC tags as predetermined information, such information may not be included. At this time, the requested power value can be determined as the power tolerance = the limited power value (a sufficiently small value having a small probability of occurrence of breakdown, generation of heat, or the like in the NFC tag, for example, 5 watts or lower). In accordance with this, even in a case in which the power tolerance of the NFC tag cannot be obtained, power transmission/reception can be continued while suppressing destruction and heat generation of the NFC tag, and a safer wireless power transmission system having higher efficiency can be realized.

In addition, in a case in which the power tolerance is not included as predetermined information stored in the NFC tag, the RX can determine the requested power value on the basis of other information as predetermined information. The other information, as described above is the version of the Qi standard under the WPC standard, information representing which NFC version this NFC tag corresponds, the version of the protection function, and the like.

In the foregoing embodiments, the power tolerance as the predetermined information stored in the NFC tag is assumed to be an integer, it may be information representing a range of power values stored in advance (for example, 0x01 = 5 watts, and 0x10 = 10 watts) or the like. At this time, the requested power value can be determined as the power tolerance = a power value within the range. In accordance with this, also in a case in which the power tolerance is not an integer, power transmission/reception can be continued while suppressing destruction and heat generation of the NFC tag, and thus a safer wireless power transmission system having higher efficiency can be realized.

In the embodiment described above, although the NFC tag using wireless communication defined in the NFC standard as a wireless communication tag has been described as an example, the wireless communication tag may be a general radio frequency identifier tag or the like other than that. In such a case, the NFC tag is substituted with an IC tag/card, an RF tag/card, or the like.

A part of the configuration (the entire configuration depending on the situations) according to the embodiment described above may be substituted with another configuration achieving the same function or may be omitted, and another configuration may be added. In addition, the configuration is not limited to the WPC standard, and can be applied to various standards.

The power transmission device and the power reception device, for example, may be an image input device such as an imaging device (a still camera, a video camera, or the like) or a scanner or may be an image output device such as a printer, a copier, a projector or the like. In addition, they may also be storage devices such as a hard disk device, a memory device, and the like or may be information processing devices such as personal computers (PC), smartphones, tablet device, and the like.

The power reception device according to the present disclosure may be an information terminal device. For example, the information terminal device includes a display unit (display), to which power received from a power reception antenna is supplied, displaying information to a user. The power received from the power reception antenna is accumulated in an accumulation unit (battery), and power is supplied from the battery to the display unit. In this case, the power reception device may have a communication unit that communicates with other devices different from the power transmission device. The communication unit may correspond to communication standards such as NFC communication, the 5th generation mobile communication system (5G), or the like.

The power reception device according to the present disclosure may also be a vehicle such as an automobile or the like. For example, the automobile, which is the power reception device, may receive electric power from a charger (a power transmission device) through a power transmission antenna installed in a parking lot. In addition, the automobile, which is the power reception device, may receive electric power from a charger (a power transmission device) through a power transmission antenna embedded in a road. Such an automobile supplies the received power to a battery. The electric power of the battery may be supplied to a drive unit (a motor or an electrically driven unit) that drives wheels or may be used for driving sensors for driving assistance or a communication unit that communicates with external devices. In other words, in this case, the power reception device may have not only the wheels but also a battery, a motor or sensors driven by the received power, and a communication unit that communicates with devices other than the power transmission device. Furthermore, the power reception device may have an accommodation unit that houses people. For example, as the sensors, there are a sensor used for measuring an inter-vehicle distance and a distance to other obstacles and the like. The communication unit, for example, may correspond to a Global Positioning System (or a Global Positioning Satellite) (GPS). In addition, the communication unit may be compliant with communication standards such as the fifth-generation mobile communication system (5G) or the like. Moreover, the vehicle may also be a bicycle or a motorcycle.

The power reception device according to the present disclosure may also be an electric tool, a home appliance, or the like. These devices, which are power reception devices, may have not only a battery but also a motor driven by the reception power stored in the battery. In addition, these devices may have a notification means that gives a notification of the remaining battery level or the like. Furthermore, these devices may have a communication unit that communicates with other devices different from the power transmission device. The communication unit may be compliant with communication standards such as NFC, the fifth-generation mobile communication system (5G), or the like.

The power transmission device according to the present disclosure may also be an in-vehicle charger that transmits power to mobile information terminal devices such as smartphones, tablets, and the like that supports wireless power transmission inside an automobile. Such an in-vehicle charger may be installed anywhere inside the automobile. For example, the in-vehicle charger may be installed in the console of the automobile, on the instrument panel (dashboard), at a position between passenger seats, on the ceiling, or on the door. However, it is preferable that the in-vehicle charger should not be installed at locations that would interfere with driving. While the power transmission device has been described as an example of an in-vehicle charger, such a charger is not limited to installation in an automobile and may also be installed in other transportation vehicles such as trains, aircraft, ships, or the like. In this case, the charger may also be installed at a position between passenger seats, on the ceiling, or on the door.

In addition, a vehicle such as an automobile or the like equipped with an in-vehicle charger may also be the power transmission device. In this case, the power transmission device has wheels and a battery and supplies electric power to the power reception device using a power transmission circuit unit or a power transmission antenna using the electric power of the battery.

The present disclosure can also be realized by supplying a program that realizes one or more functions of the above-described embodiments to a system or device through a network or a storage medium and having one or more processors of a computer in the system or the device read and execute the program. Furthermore, it can also be realized by a circuit (for example, an ASIC) that realizes one or more functions.

In addition, a part of the process described with reference to the flowcharts in the present disclosure may be realized by hardware. For example, by using a predetermined compiler, dedicated circuits may be automatically generated on an FPGA from a program for realizing each step. Similar to the FPGA, a gate array circuit may be formed to realize the process by hardware.

### (Cross-reference to Related Application)

This application is based upon and claims the benefit of priority from Japanese Patent Application No. 2023-045979, filed March 22, 2023. In addition, this application is based upon and claims the benefit of priority from Japanese Patent Application No. 2023-138520, filed August 29, 2023. In addition, the entire contents of these applications are incorporated herein by reference.

As described above, while the present disclosure has been explained in detail on the basis of preferred embodiments, the present disclosure is not limited to the embodiments described above, and various modifications may be made on the basis of the spirit of the present disclosure, and such modifications are not excluded from the scope of the present disclosure.

## Claims

1. A power reception device comprising:
a detection means configured to perform detection of a Near Field Communication (NFC) tag;
a negotiation means configured to negotiate with a power transmission device;
a determination means configured to determine power information representing power requested to the power transmission device in the negotiation on the basis of predetermined information acquired from the NFC tag; and
a transmission means configured to transmit the power information.

2. The power reception device according to claim 1 further comprising:
a calculation means configured to calculate a receivable power value on the basis of an operation state of the power reception device,
wherein the determination means determines the power information on the basis of the predetermined information and the receivable power value.

3. The power reception device according to claim 2 further comprising:
an acquisition means configured to acquire a transmittable power value from the power transmission device,
wherein the determination means determines the power information on the basis of the predetermined information, the receivable power value, and the transmittable power value.

4. The power reception device according to claim 1 further comprising:
an acquisition means configured to acquire a transmittable power value from the power transmission device,
wherein the determination means determines the power information on the basis of the predetermined information and the transmittable power value.

5. The power reception device according to claim 1,
wherein, in a case in which the NFC tag detected by the detection means is not a power transmission-allowed NFC tag, the determination means determines power information of power of a predetermined value or less.

6. The power reception device according to any one of claims 1 to 5,
wherein the predetermined information is at least one of a power value allowed by the NFC tag, a version of a Qi standard in the Wireless Power Consortium standard, information representing an NFC version to which the NFC tag corresponds, and a version of a protection function.

7. The power reception device according to claim 6,
wherein the predetermined information is stored as data in a form of an NFC Data Exchange Format of the NFC Forum standard.

8. The power reception device according to claim 6,
wherein the detection means performs detection using a reader/writer function of the NFC Forum standard.

9. The power reception device according to claim 1,
wherein, in a case in which the NFC tag detected by the detection means is a power transmission-allowed NFC tag, the determination means determines the power information on the basis of predetermined information acquired from the NFC tag.

10. The power reception device according to claim 1,
wherein, in a case in which the detection means detects a plurality of NFC tags and each of all the plurality of NFC tags is an power transmission-allowed NFC tag, the determination means compares the predetermined information of the plurality of NFC tags with each other and determines the power information on the basis of a comparison result.

11. The power reception device according to claim 10,
wherein the predetermined information is a power value allowed by each of the NFC tags, and
wherein the determination means determines a minimum value of power values allowed by the plurality of NFC tags as the power information.

12. The power reception device according to claim 1,
wherein, in a case in which the detection means detects a plurality of NFC tags, and at least one of the plurality of NFC tags is not a power transmission-allowed NFC tag, the determination means determines the power information of power equal to or less than a predetermined value.

13. The power reception device according to claim 5 or 12,
wherein the predetermined value is 5 watts.

14. A power transmission device wirelessly transmitting power to a power reception device, the power transmission device comprising:
a reception means configured to receive, in a case in which the power reception device perform detection of a Near Field Communication (NFC) tag, negotiates with the power transmission device, determines power information representing power requested to the power transmission device in the negotiation on the basis of predetermined information acquired from the NFC tag, and transmits the power information to the power transmission device, the transmitted power information; and
a power transmission means configured to transmit power determined on the basis of the received power information to the power reception device.

15. A method executed by a power reception device, the method comprising:
performing detection of a Near Field Communication (NFC) tag;
negotiating with a power transmission device;
determining power information representing power requested to the power transmission device in the negotiation on the basis of predetermined information acquired from the NFC tag; and
transmitting the power information.

16. A storage medium storing a program for causing a power reception device to execute
performing detection of a Near Field Communication (NFC) tag;
negotiating with a power transmission device;
determining power information representing a power requested to the power transmission device in the negotiation on the basis of predetermined information acquired from the NFC tag; and
transmitting the power information.
